# EUROPEAN PATENT APPLICATION

(11) **EP 4 598 062 A1**
(43) Date of publication of application: **06.08.2025**
(21) Application number: 22959872.7
(22) Date of filing: 27.09.2022
(51) Int. Cl.: H04W 4/02, G01S 19/42

(54) **GLOBAL NAVIGATION SATELLITE SYSTEM (GNSS) INFORMATION MEASUREMENT METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/121900
(87) International publication number: WO 2024/065223

(57) **Abstract**

A global navigation satellite system (GNSS) information measurement method and apparatus. A terminal can receive measurement configuration information sent by a base station, the measurement configuration information comprising information used for determining a measurement window; the terminal further measures GNSS information according to the measurement configuration information. When GNSS information expires, large terminal service time delays can be avoided, and unnecessary power consumption of terminals can be reduced.

## Description

### TECHNICAL FIELD

The disclosure relates to the field of wireless communication technology and in particular to a method and an apparatus for measuring global navigation satellite system (GNSS) information.

### BACKGROUND

In the study of wireless communication technology, satellite communication is considered to be an important aspect of the future development of wireless communication technology. The satellite communication refers to communication where ground-based radio communication equipment uses satellites as a relay to transmit signals. The characteristics of satellite communication include: a large coverage range; a capability that communication may be performed between any two points within the electromagnetic wave coverage area of the satellite; and a high reliability with minimal impact from terrestrial disasters. As a complement to current ground-based cellular communication systems, it may be foreseen that in future wireless communication system, satellite communication system and terrestrial cellular network will gradually achieve deep integration, ultimately realizing the intelligent connectivity of all things.

In the context of satellite communication, data transmission has a large delay due to a long signal transmission distance between a transmitter and a receiver. For transmissions with an uplink and downlink relationship, a terminal needs to maintain uplink synchronization based on global navigation satellite system (GNSS) measurement and some auxiliary information. In existing methods, when the GNSS information expires, the terminal needs to enter an idle (IDLE) state to re-execute the process of measuring the GNSS information. However, this method leads to a large service delay of the terminal and also requires the terminal to re-execute the access process, which consumes a significant amount of power consumption of the terminal.

### SUMMARY

The disclosure provides a method and an apparatus for measuring global navigation satellite system (GNSS) information, which is capable of avoiding a large service delay of the terminal and reducing unnecessary power consumption of the terminal when the GNSS information expires.

According to a first aspect of the embodiments of the disclosure, a method for measuring GNSS information is provided. The method is performed by a terminal, including: receiving measurement configuration information sent by a base station, in which the measurement configuration information includes information for determining a measurement window; and measuring GNSS information based on the measurement configuration information.

In some embodiments of the disclosure, the method further includes: reporting auxiliary information for determining the measurement configuration information, in which the auxiliary information includes at least one of: a required measurement time for the GNSS information, an available time for the current GNSS information, or a start position of the available time for the GNSS information.

In some embodiments of the disclosure, reporting the auxiliary information for determining the measurement configuration information includes: when a reporting trigger command is received, reporting the auxiliary information for determining the measurement configuration information to the base station; when it is determined that a preset reporting trigger condition is satisfied, reporting the auxiliary information for determining the measurement configuration information to the base station; or determining, based on resource configuration information sent by the base station, an uplink resource for sending an uplink reference signal, and reporting the auxiliary information for determining the measurement configuration information to the base station periodically via an uplink channel indicated by the uplink resource.

In some embodiments of the disclosure, the method further includes: receiving the reporting trigger command sent by the base station, in which the reporting trigger command indicates the reporting of the auxiliary information.

In some embodiments of the disclosure, the method further includes: receiving the resource configuration information sent by the base station, in which the resource configuration information indicates the uplink resource for sending the uplink reference signal.

In some embodiments of the disclosure, the measurement configuration information is carried in a higher layer signaling or a physical layer signaling.

In some embodiments of the disclosure, measuring the GNSS information based on the measurement configuration information includes: determining the measurement window indicated by the measurement configuration information; and measuring the GNSS information using the measurement window.

In some embodiments of the disclosure, measuring the GNSS information based on the measurement configuration information includes: when a measurement trigger command is received, determining a measurement window indicated by the measurement trigger command based on the measurement configuration information; and measuring the GNSS information using the measurement window indicated.

In some embodiments of the disclosure, the method further includes: receiving the measurement trigger command sent by the base station, in which the measurement trigger command indicates a measurement start time point for measuring the GNSS information and a number of measurement windows.

In some embodiments of the disclosure, measuring the GNSS information based on the measurement configuration information includes: when a current GNSS information is expired, determining a measurement window based on the measurement configuration information, in which the measurement window is a measurement window after an expiration time point of the current GNSS information; and measuring the GNSS information using the measurement window.

In some embodiments of the disclosure, after measuring the GNSS information based on the measurement configuration information, the method further includes: reporting updated auxiliary information to the base station.

According to a second aspect of the embodiments of the disclosure, a method for measuring GNSS information is provided. The method is performed by a base station, including: sending measurement configuration information to a terminal, in which the measurement configuration information includes information for determining a measurement window.

In some embodiments of the disclosure, the method further includes: receiving auxiliary information for determining the measurement configuration information reported by the terminal, in which the auxiliary information includes at least one of: a required measurement time for the GNSS information, an available time for the current GNSS information, or a start position of the available time for the GNSS information.

In some embodiments of the disclosure, the method further includes: sending a reporting trigger command to the terminal, in which the reporting trigger command indicates the reporting of the auxiliary information.

In some embodiments of the disclosure, the method further includes: sending the resource configuration information to the terminal, in which the resource configuration information indicates an uplink resource for sending an uplink reference signal.

In some embodiments of the disclosure, sending the measurement configuration information to the terminal includes: sending the measurement configuration information via a higher layer signaling or a physical layer signaling.

In some embodiments of the disclosure, the method further includes: sending a measurement trigger command to the terminal, in which the measurement trigger command indicates a measurement start time point for measuring the GNSS information and a number of measurement windows.

In some embodiments of the disclosure, the method further includes: receiving updated auxiliary information reported by the terminal, in which the updated auxiliary information is sent by the terminal after measuring the GNSS information based on the measurement configuration information.

According to a third aspect of the embodiments of the disclosure, a terminal is provided. The terminal includes: a receiving module, configured to receive measurement configuration information sent by a base station, in which the measurement configuration information includes information for determining a measurement window; and a processing module, configured to measure GNSS information based on the measurement configuration information.

According to a fourth aspect of the embodiments of the disclosure, a base station is provided. The base station includes: a sending module, configured to send measurement configuration information to a terminal, in which the measurement configuration information includes information for determining a measurement window.

According to a fifth aspect of the embodiments of the disclosure, a communication device is provided. The communication device includes: a transceiver; a memory; and a processor connected to the transceiver and the memory respectively, in which the processor is configured to: control the transceiver to send and receive wireless signals and implement the method according to the first aspect or the second aspect of the embodiments of the disclosure, by executing computer-executable instructions on the memory.

According to a sixth aspect of the embodiments of the disclosure, a computer storage medium is provided. The computer storage medium stores computer-executable instructions which, when executed by a processor, enable the method according to the first aspect or the second aspect of the embodiments of the disclosure to be implemented.

According to a sixth aspect of the embodiments of the disclosure, a communication system is provided. The communication system includes: a terminal and a base station, in which the terminal is configured to perform the method according to the first aspect of the embodiments, and the base station is configured to perform the method according to the second aspect of the embodiments.

The disclosure provides a method and an apparatus for measuring GNSS information, which is capable of measuring the GNSS information before or after the GNSS information expires based on the measurement configuration information sent by the base station, so that the terminal does not need to enter an idle (IDLE) state to re-execute the process of measuring the GNSS information. This avoids the large service delay of the terminal and reduces the unnecessary power consumption of the terminal.

Additional aspects and advantages of the present invention will be set forth in part in the description which follows, and in part will be obvious from the description, or will be learned by practice of the present invention.

### BRIEF DESCRIPTION OF THE DRAWINGS

The above-mentioned and/or additional aspects and advantages of the disclosure will become apparent and readily appreciated from the following description of embodiments, taken in combination with the accompanying drawings.
FIG. 1 is a flow chart illustrating a method for measuring global navigation satellite system (GNSS) information according to an embodiment of the disclosure.
FIG. 2 is a flow chart illustrating a method for measuring GNSS information according to an embodiment of the disclosure.
FIG. 3 is a schematic diagram illustrating an example of measuring GNSS information via a first measurement window according to an embodiment of the disclosure.
FIG. 4 is a flow chart illustrating a method for measuring GNSS information according to an embodiment of the disclosure.
FIG. 5 is a schematic diagram illustrating an example of measuring GNSS information via a second measurement window according to an embodiment of the disclosure.
FIG. 6 is a flow chart illustrating a method for measuring GNSS information according to an embodiment of the disclosure.
FIG. 7 is a schematic diagram illustrating an example of measuring GNSS information via a third measurement window according to an embodiment of the disclosure.
FIG. 8 is a flow chart illustrating a method for measuring GNSS information according to an embodiment of the disclosure.
FIG. 9 is a flow chart illustrating a method for measuring GNSS information according to an embodiment of the disclosure.
FIG. 10 is a timing diagram illustrating a method for measuring GNSS information according to an embodiment of the disclosure.
FIG. 11 is a block diagram illustrating an apparatus for measuring GNSS information according to an embodiment of the disclosure.
FIG. 12 is a block diagram illustrating an apparatus for measuring GNSS information according to an embodiment of the disclosure.
FIG. 13 is a structural block diagram illustrating a communication device according to an embodiment of the disclosure.
FIG. 14 is a structural block diagram illustrating a chip according to an embodiment of the disclosure.

### DETAILED DESCRIPTION

Embodiments of the disclosure are described in detail below, and examples of the embodiments are illustrated in the accompanying drawings, in which the same or similar symbols from beginning to end indicate the same or similar elements or elements having the same or similar functions. The embodiments described below by reference to the accompanying drawings are exemplary and are intended to be used to explain the disclosure and are not to be construed as a limitation of the disclosure.

In the context of satellite communication, data transmission has a large delay due to a long signal transmission distance between a transmitter and a receiver. For transmissions with an uplink and downlink relationship, a terminal needs to maintain uplink synchronization based on global navigation satellite system (GNSS) measurement and some auxiliary information. In existing methods, when the GNSS information expires, the terminal needs to enter an idle (IDLE) state to re-execute the process of measuring the GNSS information. However, this method leads to a large service delay of the terminal and also requires the terminal to re-execute the access process, which consumes a significant amount of power consumption of the terminal.

Thus, the disclosure provides a method and an apparatus for measuring GNSS information, which is capable of avoiding the large service delay of the terminal and reducing the unnecessary power consumption of the terminal when the GNSS information expires.

The method and the apparatus for measuring GNSS information provided in the present disclosure are described in detail below in combination with the accompanying drawings.

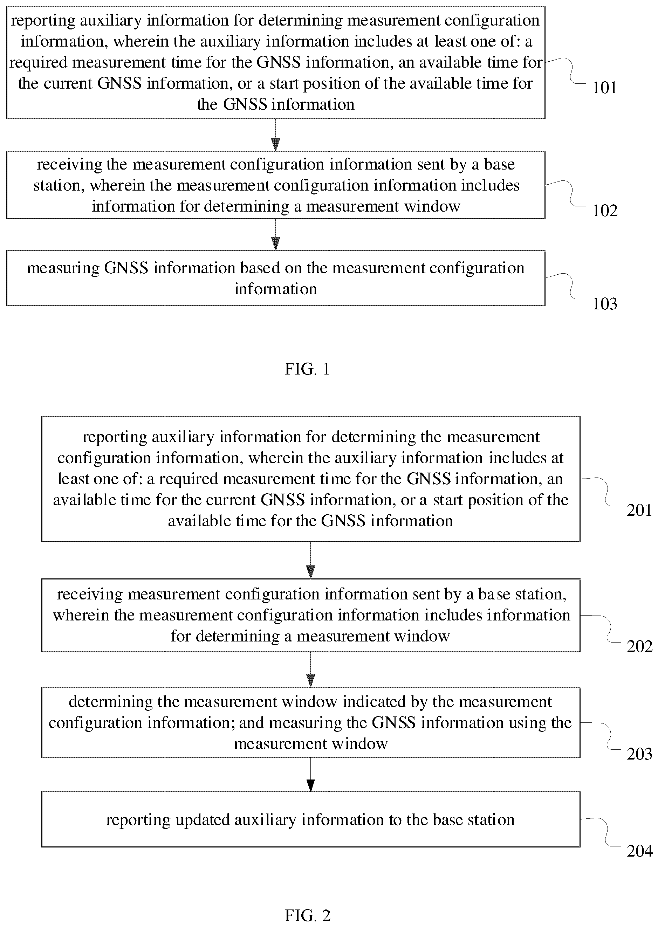

FIG. 1 is a flow chart illustrating a method for measuring GNSS information according to an embodiment of the disclosure. As shown in FIG. 1, the method is performed by a terminal and may include the following steps 101 to 103.

At step 101, auxiliary information for determining measurement configuration information is reported, in which the auxiliary information includes at least one of: a required measurement time for the GNSS information, an available time for the current GNSS information, or a start position of the available time for the GNSS information.

The reporting of the auxiliary information may be triggered by the base station, independently triggered by the terminal, or triggered periodically. In the case that the reporting of the auxiliary information is triggered by the base station, the terminal receives a relevant trigger command sent by the base station to determine and report auxiliary information related to a GNSS measurement capability of the terminal. The trigger command may be a higher layer signaling or a physical layer signaling. The higher layer signaling may include system information, a radio resource control (RRC) signaling, or a media access control (MAC) control element (CE). The physical layer signaling may be downlink control information (DCI). In the case that the reporting of the auxiliary information is independently triggered by the terminal, the terminal may trigger the reporting of the auxiliary information related to the GNSS information measurement capability when certain conditions are satisfied. For example, in an implementation, the triggering condition may be that the change of a moving speed of the terminal exceeds a certain threshold. In the case that the reporting of the auxiliary information is triggered periodically, the terminal may receive the resource configuration information sent by the base station, and report the auxiliary information related to the GNSS measurement capability at a corresponding resource location. In a possible implementation, at least two of the above reporting modes may also be jointly adopted by the terminal to report the auxiliary information for determining the measurement configuration information to the base station. For example, in response to the reporting trigger command, the terminal periodically reports the auxiliary information to the base station via an uplink channel indicated by an uplink resource. For example, the terminal periodically reports the auxiliary information to the base station via the uplink channel indicated by the uplink resource when a certain condition is satisfied, etc., which will not be exhaustively enumerated herein.

Accordingly, the steps of this embodiment may specifically include: when a reporting trigger command is received, reporting the auxiliary information for determining the measurement configuration information to the base station; when it is determined that a preset reporting trigger condition is satisfied, reporting the auxiliary information for determining the measurement configuration information to the base station; or determining, based on resource configuration information sent by the base station, an uplink resource for sending an uplink reference signal, and reporting the auxiliary information for determining the measurement configuration information to the base station periodically via an uplink channel indicated by the uplink resource.

Accordingly, in response to the reporting trigger command, before reporting the auxiliary information for determining the measurement configuration information to the base station, the embodiment steps further include: receiving the reporting trigger command sent by the base station, in which the reporting trigger command indicates the reporting of the auxiliary information. Before the steps of determining, based on resource configuration information sent by the base station, an uplink resource for sending an uplink reference signal, and reporting the auxiliary information for determining the measurement configuration information to the base station periodically via an uplink channel indicated by the uplink resource, the embodiment steps further include: receiving the resource configuration information sent by the base station, in which the resource configuration information indicates the uplink resource for sending the uplink reference signal.

At step 102, the measurement configuration information sent by a base station is received, in which the measurement configuration information includes information for determining a measurement window.

In a specific application scenario, after the auxiliary information is reported to the base station, the base station may generate measurement configuration information corresponding to a next GNSS information measurement based on the auxiliary information that is determined based on the current GNSS information. Accordingly, in embodiments of the disclosure, the terminal may receive the higher layer signaling (such as system information, an RRC signaling, or an MAC CE) or the physical layer signaling (such as indication information of DCI) sent by the base station in a predefined mode, and obtain the measurement configuration information based on the indication information. The measurement configuration information may include a measurement period, and information for determining a measurement window within the measurement period. The information for determining the measurement window may include a start position of the measurement window, a measurement duration, or an end position of the measurement.

At step 103, GNSS information is measured based on the measurement configuration information.

In embodiments of the disclosure, after receiving the measurement configuration information, the terminal may determine one or more measurement windows for performing GNSS information measurement based on measurement window information included within the measurement configuration information, and further measure the GNSS information periodically within a measurement period using the one or more measurement windows.

In summary, according to the method for measuring the GNSS information provided in embodiments of the disclosure, the GNSS information may be measured before or after the GNSS information expires based on the measurement configuration information sent by the base station, thus avoiding the large service delay of the terminal and reducing the unnecessary power consumption of the terminal when the GNSS information expires.

FIG. 2 is a flow chart illustrating a method for measuring GNSS information according to an embodiment of the disclosure. The method is performed by a terminal. Based on the embodiments shown in FIG. 1, as shown in FIG. 2, the method may include the following steps 201 to 204.

At step 201, auxiliary information for determining the measurement configuration information is reported, in which the auxiliary information includes at least one of: a required measurement time for the GNSS information, an available time for the current GNSS information, or a start position of the available time for the GNSS information.

For this embodiment of the disclosure, the specific implementation may refer to the relevant description in step 101 of the embodiments, which will not be repeated herein.

At step 202, the measurement configuration information sent by a base station is received, in which the measurement configuration information includes information for determining a measurement window.

For this embodiment of the disclosure, the specific implementation may refer to the relevant description in step 102 of the embodiments, which will not be repeated herein.

At step 203, the measurement window indicated by the measurement configuration information is determined; and the GNSS information is measured using the measurement window.

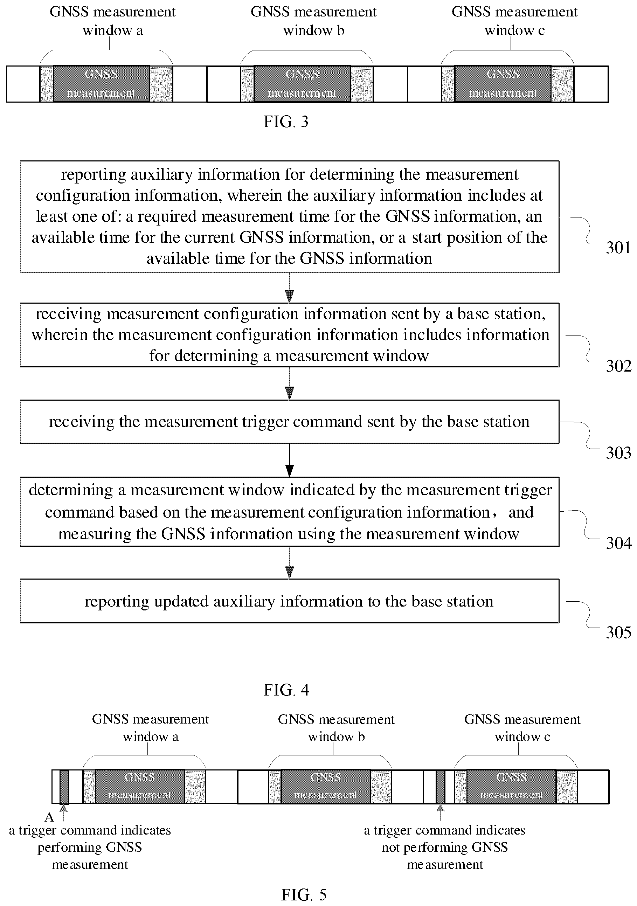

In embodiments of the disclosure, after receiving the measurement configuration information sent by the base station, the terminal may determine all measurement windows indicated in the measurement configuration information as measurement windows for measuring the GNSS information, and measure the GNSS information on all of the indicated measurement windows. As shown in FIG. 3, if the measurement windows indicated by the measurement configuration information include a GNSS measurement window a, a GNSS measurement window b, and a GNSS measurement window c, in embodiments of the disclosure, the GNSS measurement window a, the GNSS measurement window b, and the GNSS measurement window c may be determined as the measurement windows for measuring the GNSS information, and the GNSS information may be further measured using the measurement windows.

At step 204, updated auxiliary information is reported to the base station.

In embodiments of the disclosure, after the GNSS information is obtained by measurement using the measurement window determined in step 203 of this embodiment, new auxiliary information may be determined based on new GNSS information and reported to the base station, so that the base station determines measurement configuration information corresponding to a next GNSS information based on the new auxiliary information reported by the terminal, and indicates the terminal to measure the next GNSS information using the measurement configuration information.

In summary, according to the method for measuring the GNSS information provided in embodiments of the disclosure, the measurement window indicated by the measurement configuration information may be determined, and the terminal measures the GNSS information using the measurement window, which may avoid the situation where the terminal frequently performs GNSS measurements, and may reduce the power consumption of the terminal.

FIG. 4 is a flow chart illustrating a method for measuring GNSS information according to an embodiment of the disclosure. The method is performed by a terminal. Based on the embodiments shown in FIG. 1, as shown in FIG. 4, the method may include the following steps 301 to 305.

At step 301, auxiliary information for determining the measurement configuration information is reported, in which the auxiliary information includes at least one of: a required measurement time for the GNSS information, an available time for the current GNSS information, or a start position of the available time for the GNSS information.

For this embodiment of the disclosure, the specific implementation may refer to the relevant description in step 101 of the embodiments, which will not be repeated herein.

At step 302, the measurement configuration information sent by a base station is received, in which the measurement configuration information includes information for determining a measurement window.

For this embodiment of the disclosure, the specific implementation may refer to the relevant description in step 102 of the embodiments, which will not be repeated herein.

At step 303, the measurement trigger command sent by the base station is received.

The measurement trigger command indicates a measurement start time point for measuring the GNSS information, a time domain length of the measurement window, and a number of measurement windows, and other information.

In embodiments of the disclosure, after receiving the measurement configuration information sent by the base station, in a possible implementation, the terminal may further receive a trigger command sent by the base station before the measurement window. The trigger command carries indication information that indicates whether the terminal is required to perform the GNSS information measurement in the next or subsequent plurality of measurement windows.

At step 304, a measurement window indicated by the measurement trigger command is determined based on the measurement configuration information; and the GNSS information is measured using the measurement window indicated.

In embodiments of the disclosure, after receiving the measurement configuration information sent by the base station, the terminal may further screen/select, based on the measurement trigger command sent by the base station, at least one measurement window that matches the measurement start time point and the number of measurement windows indicated by the measurement trigger command from the measurement windows included in the measurement configuration information, and then measure the GNSS information using the screened at least one measurement window. As shown in FIG. 5, the measurement windows indicated by the measurement configuration information include a GNSS measurement window a, a GNSS measurement window b, and a GNSS measurement window c. In embodiments of the disclosure, if the measurement trigger command indicates that the measurement start time point for measuring the GNSS information is A, and the number of measurement windows is 1, then the GNSS measurement window a among the GNSS measurement window a, the GNSS measurement window b, and the GNSS measurement window c may be determined as the measurement window indicated by the measurement trigger command, in response to the measurement trigger command. The GNSS measurement window a is further used to measure the GNSS information. That is, after receiving configuration information of the measurement windows, the terminal does not need to perform the GNSS measurement in all the configured measurement windows, but only in some measurement windows based on the trigger command from the base station.

At step 305, updated auxiliary information is reported to the base station.

In embodiments of the disclosure, after the GNSS information is obtained by measurement using the measurement window determined in step 304 of the embodiments, new auxiliary information may be determined based on new GNSS information and reported to the base station, so that the base station determines measurement configuration information corresponding to the next GNSS information based on the new auxiliary information reported by the terminal, and indicates the terminal to measure the next GNSS information using the measurement configuration information.

In summary, according to the method for measuring the GNSS information provided in embodiments of the disclosure, the measurement window indicated by the measurement configuration information may be determined in response to the measurement trigger command sent by the base station, and the terminal measures the GNSS information using the measurement window, which may avoid the situation where the terminal frequently performs GNSS measurement, and may reduce the power consumption of the terminal.

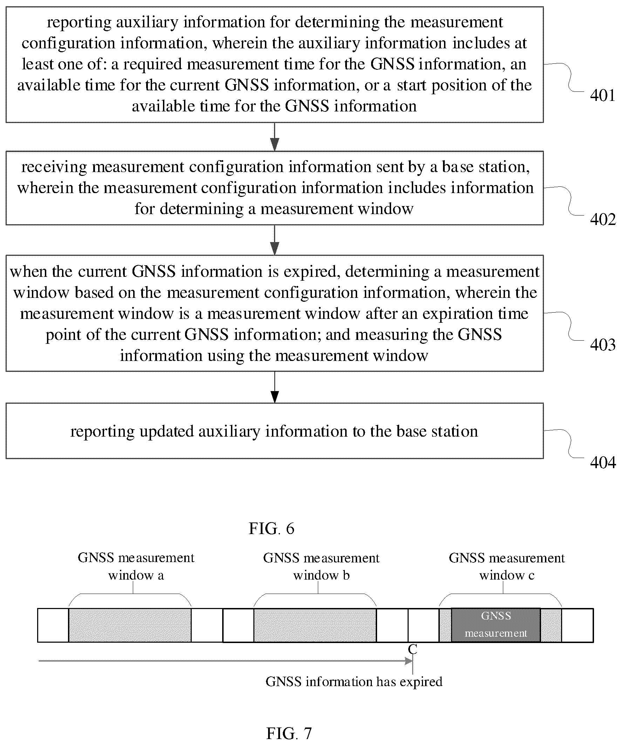

FIG. 6 is a flow chart illustrating a method for measuring GNSS information according to an embodiment of the disclosure. The method is performed by a terminal. Based on the embodiments shown in FIG. 1, as shown in FIG. 6, the method may include the following steps 401 to 405.

At step 401, auxiliary information for determining the measurement configuration information is reported, in which the auxiliary information includes at least one of: a required measurement time for the GNSS information, an available time for the current GNSS information, or a start position of the available time for the GNSS information.

For this embodiment of the disclosure, the specific implementation may refer to the relevant description in step 101 of the embodiments, which will not be repeated herein.

At step 402, the measurement configuration information sent by a base station is received, in which the measurement configuration information includes information for determining a measurement window.

For this embodiment of the disclosure, the specific implementation may refer to the relevant description in step 102 of the embodiments, which will not be repeated herein.

At step 403, when a current GNSS information is expired, a measurement window is determined based on the measurement configuration information, in which the measurement window is a measurement window after an expiration time point of the current GNSS information; and the GNSS information is measured using the measurement window.

In embodiments of the disclosure, after receiving the measurement configuration information sent by the base station, the terminal may further decide independently whether or not to perform information measurement within the measurement window. For example, in the case that the GNSS information is available, the terminal may not perform the GNSS information measurement within the measurement window; and in the case that the GNSS information is not available, the terminal may perform the GNSS information measurement within the measurement window. When performing the GNSS information measurement within the measurement window, the terminal may screen at least one measurement window that matches the expiration time point of the current GNSS information from the measurement windows included in the measurement configuration information, and then measure the GNSS information using the screened at least one measurement window. As shown in FIG. 7, the measurement windows indicated by the measurement configuration information include a GNSS measurement window a, a GNSS measurement window b, and a GNSS measurement window c. In embodiments of the disclosure, if the expiration time point of the current GNSS information is C, then the GNSS measurement window c that is located after the expiration time point C among the GNSS measurement window a, the GNSS measurement window b, the GNSS measurement window c, may be determined as a screened measurement window, and the GNSS measurement window c may be further used to measure the GNSS information.

At step 404, updated auxiliary information is reported to the base station.

In embodiments of the disclosure, after the GNSS information is obtained by measurement using the measurement window determined in step 403 of the embodiments, new auxiliary information may be determined based on new GNSS information and reported to the base station, so that the base station determines measurement configuration information corresponding to the next GNSS information based on the new auxiliary information reported by the terminal, and indicates the terminal to measure the next GNSS information using the measurement configuration information.

In summary, according to the method for measuring the GNSS information provided in embodiments of the disclosure, in response to the current GNSS information being expired, the measurement window located after the expiration time point is determined, and the GNSS information is measured using the measurement window, which may avoid the situation where the terminal frequently performs GNSS measurement, and may reduce the power consumption of the terminal.

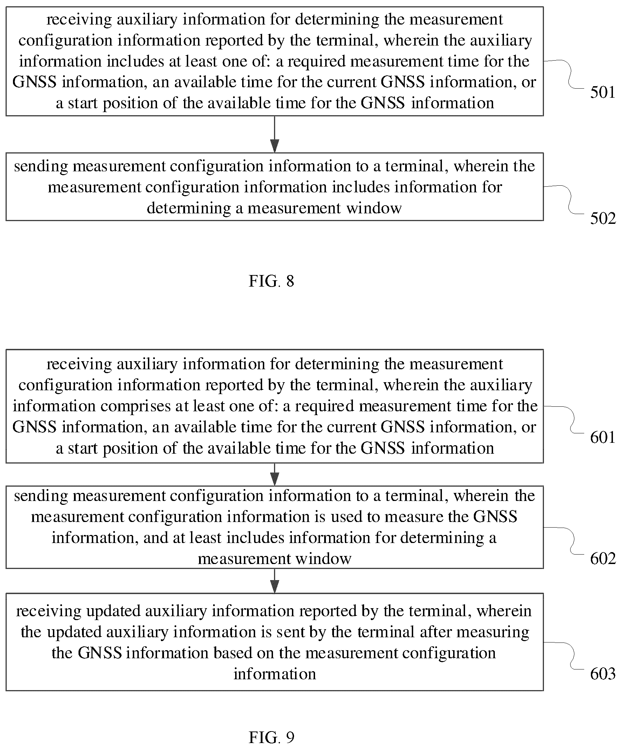

FIG. 8 is a flow chart illustrating a method for measuring GNSS information according to an embodiment of the disclosure. The method is performed by a base station and may include the following steps 501 to 502.

At step 501, auxiliary information for determining the measurement configuration information reported by the terminal is received, in which the auxiliary information includes at least one of: a required measurement time for the GNSS information, an available time for the current GNSS information, or a start position of the available time for the GNSS information.

The reporting of the auxiliary information by the terminal may be triggered by the base station, independently triggered by the terminal, or triggered periodically. In the case that the reporting of the auxiliary information is triggered by the base station, the base station may send a reporting trigger command to the terminal that indicates the reporting of the auxiliary information, so that the terminal is caused to report the auxiliary information of the measurement configuration information to the base station based on the reporting trigger command. The trigger command may be a higher layer signaling or a physical layer signaling. The higher layer signaling may include system information, an RRC signaling, or an MAC CE. The physical layer signaling may be DCI. In the case that the reporting of the auxiliary information is independently triggered by the terminal, the terminal may trigger the reporting of the auxiliary information related to the GNSS information measurement capability when certain conditions are satisfied. For example, in an implementation, the triggering condition may be that the change of a moving speed of the terminal exceeds a certain threshold. In the case that the reporting of the auxiliary information is triggered periodically, the base station may send the resource configuration information to the terminal. The resource configuration information indicates an uplink resource for sending an uplink reference signal. Accordingly, the terminal may receive the resource configuration information sent by the base station, and report the auxiliary information related to the GNSS measurement capability at a corresponding resource location. In a possible implementation, at least two of the above reporting modes may also be jointly adopted by the terminal to report the auxiliary information for determining the measurement configuration information to the base station. For example, in response to the reporting trigger command, the terminal periodically reports the auxiliary information to the base station via an uplink channel indicated by the uplink resource. For example, the terminal periodically reports the auxiliary information to the base station via the uplink channel indicated by the uplink resource when a certain condition is satisfied, etc., which will not be exhaustively enumerated herein.

Accordingly, before performing the above step in this embodiment, the embodiment steps further include: sending a reporting trigger command to the terminal, in which the reporting trigger command indicates the reporting of the auxiliary information; and sending the resource configuration information to the terminal, in which the resource configuration information indicates an uplink resource for sending an uplink reference signal.

At step 502, measurement configuration information is sent to a terminal, in which the measurement configuration information includes information for determining a measurement window.

In embodiments of the disclosure, after receiving the auxiliary information reported by the terminal, the base station may generate measurement configuration information corresponding to a next GNSS information measurement based on the auxiliary information that is determined based on the current GNSS information, and send the measurement configuration information to the terminal. Accordingly, in embodiments of the disclosure, the base station may send the higher layer signaling (such as system information, an RRC signaling, or an MAC CE), or the physical layer signaling (such as indication information of DCI) in a predefined mode, and send the measurement configuration information to the terminal using the indication information. Thus, the terminal may determine one or more measurement windows for performing GNSS information measurement based on measurement window information included within the measurement configuration information, and further measure the GNSS information periodically within a measurement period using the one or more measurement windows. The measurement configuration information may include a measurement period, and information for determining a measurement window within the measurement period. The information for determining the measurement window may include a start position of the measurement window, a measurement duration, or an end position of the measurement.

Accordingly, when the terminal determines the one or more measurement windows for performing GNSS information measurement based on the measurement window information included within the measurement configuration information, the base station may send a measurement trigger command to the terminal. The measurement trigger command indicates a measurement start time point for measuring the GNSS information, a time domain length of the measurement window, and a number of measurement windows, and other information. Thus, after receiving the measurement configuration information sent by the base station, the terminal may further determine the measurement window indicated by the measurement trigger command based on the measurement configuration information; and measure the GNSS information using the measurement window.

In summary, according to the method for measuring the GNSS information provided in embodiments of the disclosure, the base station may send the measurement configuration information to the terminal before or after the GNSS information expires, and the terminal measures the GNSS information based on the measurement configuration information, which may avoid the situation where the terminal frequently performs GNSS measurement, and may reduce the power consumption of the terminal.

FIG. 9 is a flow chart illustrating a method for measuring GNSS information according to an embodiment of the disclosure. The method is performed by a base station. Based on the embodiments shown in FIG. 8, as shown in FIG. 9, the method may include the following steps 601 to 603.

At step 601, auxiliary information for determining the measurement configuration information reported by the terminal is received, in which the auxiliary information includes at least one of: a required measurement time for the GNSS information, an available time for the current GNSS information, or a start position of the available time for the GNSS information.

For this embodiment of the disclosure, the specific implementation may refer to the relevant description in step 501 of the embodiments, which will not be repeated herein.

At step 602, measurement configuration information is sent to a terminal, in which the measurement configuration information is used to measure the GNSS information, and at least includes information for determining a measurement window.

For this embodiment of the disclosure, the specific implementation may refer to the relevant description in step 502 of the embodiments, which will not be repeated herein.

At step 603, updated auxiliary information reported by the terminal is received, in which the updated auxiliary information is sent by the terminal after measuring the GNSS information based on the measurement configuration information.

In embodiments of the disclosure, after the terminal obtains the GNSS information by performing measurement based on the measurement configuration information, new auxiliary information may be determined based on new GNSS information and reported to the base station. Accordingly, the base station may receive the auxiliary information reported by the terminal. Further, the base station may determine measurement configuration information corresponding to the next GNSS information based on the new auxiliary information reported by the terminal, and indicates the terminal to measure the next GNSS information using the measurement configuration information.

In summary, according to the method for measuring the GNSS information provided in embodiments of the disclosure, the base station may update the measurement configuration information in time before or after the GNSS information expires based on the received auxiliary information, and send the updated measurement configuration information to the terminal. Then, the terminal measures the GNSS information dynamically based on the measurement configuration information, which may avoid the situation where the terminal frequently performs GNSS measurement, and may reduce the power consumption of the terminal.

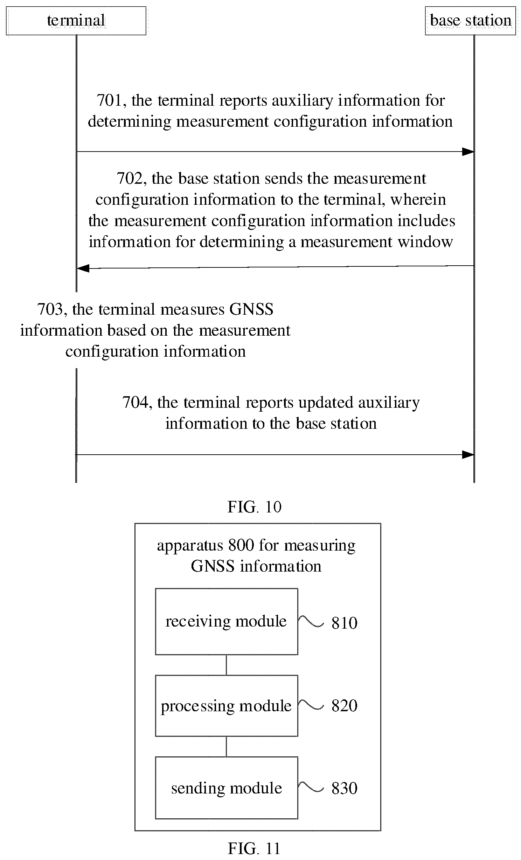

FIG. 10 is a timing diagram illustrating a method for measuring GNSS information according to an embodiment of the disclosure. The method is applied to a communication system for measurement of GNSS information. The system includes: a terminal, and a base station. The terminal reports auxiliary information for determining measurement configuration information, in which the auxiliary information includes at least one of: a required measurement time for the GNSS information, an available time for the current GNSS information, or a start position of the available time for the GNSS information. The base station sends measurement configuration information to the terminal. The measurement configuration information is configured to measure the GNSS information. The measurement configuration information includes at least information for determining a measurement window. The terminal measures the GNSS information based on the measurement configuration information, and reports updated auxiliary information to the base station.

Referring to FIG. 10, the method includes the following steps 701 to 704.

At step 701, the terminal reports auxiliary information for determining measurement configuration information.

The auxiliary information includes at least one of: a required measurement time for the GNSS information, an available time for the current GNSS information, or a start position of the available time for the GNSS information. The reporting of the auxiliary information may be triggered by the base station, independently triggered by the terminal, or triggered periodically. Alternatively, the auxiliary information may be reported in a combination of the above modes. In the case that the reporting of the auxiliary information is triggered by the base station, the terminal receives a relevant trigger command sent by the base station to determine and report auxiliary information related to a GNSS measurement capability of the terminal. The trigger command may be a higher layer signaling or a physical layer signaling. The higher layer signaling may include system information, an RRC signaling, or an MAC CE. The physical layer signaling may be DCI. In the case that the reporting of the auxiliary information is triggered by the terminal, the terminal may trigger the reporting of the auxiliary information related to the GNSS information measurement capability when certain conditions are satisfied. For example, in an implementation, the triggering condition may be that the change of a moving speed of the terminal exceeds a certain threshold. In the case that the reporting of the auxiliary information is triggered periodically, the terminal may receive the resource configuration information sent by the base station, and report the auxiliary information related to the GNSS measurement capability at a corresponding resource location.

Accordingly, the steps of this embodiment may specifically include: when a reporting trigger command is received, reporting the auxiliary information for determining the measurement configuration information to the base station; in response to determining that a preset reporting trigger condition is satisfied, reporting the auxiliary information for determining the measurement configuration information to the base station; or determining, based on resource configuration information sent by the base station, an uplink resource for sending an uplink reference signal, and reporting the auxiliary information for determining the measurement configuration information to the base station periodically via an uplink channel indicated by the uplink resource.

Accordingly, in response to the reporting trigger command, before reporting the auxiliary information for determining the measurement configuration information to the base station, the embodiment steps further include: receiving the reporting trigger command sent by the base station, in which the reporting trigger command indicates the reporting of the auxiliary information. Before the steps of determining, based on resource configuration information sent by the base station, an uplink resource for sending an uplink reference signal, and reporting the auxiliary information for determining the measurement configuration information to the base station periodically via an uplink channel indicated by the uplink resource, the embodiment steps further includes: receiving the resource configuration information sent by the base station, in which the resource configuration information indicates the uplink resource for sending the uplink reference signal.

At step 702, the base station sends the measurement configuration information to the terminal, in which the measurement configuration information includes information for determining a measurement window.

In embodiments of the disclosure, after receiving the auxiliary information reported by the terminal, the base station may generate measurement configuration information corresponding to the next GNSS information measurement based on the auxiliary information that is determined based on the current GNSS information, and send the measurement configuration information to the terminal. Accordingly, in embodiments of the disclosure, the base station may send the higher layer signaling (such as system information, an RRC signaling, or an MAC CE), or the physical layer signaling (such as indication information of DCI) in a predefined mode, and send the measurement configuration information to the terminal using the indication information. Thus, the terminal may determine one or more measurement windows for performing GNSS information measurement based on measurement window information included within the measurement configuration information, and further measure the GNSS information periodically within a measurement period using the one or more measurement windows. The measurement configuration information may include a measurement period, and information for determining a measurement window within the measurement period. The information for determining the measurement window may include a start position of the measurement window, a measurement duration, or an end position of the measurement.

At step 703, the terminal measures the GNSS information based on the measurement configuration information.

In embodiments of the disclosure, after receiving the measurement configuration information, the terminal may determine one or more measurement windows for performing GNSS information measurement based on measurement window information included within the measurement configuration information, and further measure the GNSS information periodically within a measurement period using the one or more measurement windows.

In a possible implementation, after receiving the measurement configuration information sent by the base station, the terminal may determine all measurement windows indicated in the measurement configuration information as measurement windows for measuring the GNSS information, and measure the GNSS information on all of the indicated measurement windows. The details may be found in the relevant description in step 203 of the embodiments, and will not be repeated herein.

In a possible implementation, after receiving the measurement configuration information sent by the base station, the terminal may further screen, in response to the measurement trigger command sent by the base station, at least one measurement window that matches the measurement start time point and the number of measurement windows indicated by the measurement trigger command from the measurement windows included in the measurement configuration information, and then measure the GNSS information using the screened at least one measurement window. The details may be found in the relevant description in steps 302 and 303 of the embodiments, and will not be repeated herein.

In a possible implementation, after receiving the measurement configuration information sent by the base station, the terminal may further decide independently whether or not to perform information measurement within the measurement window. For example, in the case that the GNSS information is available, the terminal may not perform the GNSS information measurement within the measurement window; and in the case that the GNSS information is not available, the terminal may perform the GNSS information measurement within the measurement window. When performing the GNSS information measurement within the measurement window, the terminal may screen at least one measurement window that matches the expiration time point of the current GNSS information from the measurement windows included in the measurement configuration information, and then measure the GNSS information using the screened at least one measurement window. The details may be found in the relevant description in step 403 of the embodiments, and will not be repeated herein.

Accordingly, when the terminal determines one or more measurement windows for performing GNSS information measurement based on measurement window information included within the measurement configuration information, the base station may send a measurement trigger command to the terminal. The measurement trigger command indicates a measurement start time point for measuring the GNSS information, a time domain length of the measurement window, and a number of measurement windows, and other information. Thus, after receiving the measurement configuration information sent by the base station, the terminal may further determine the measurement window indicated by the measurement trigger command based on the measurement configuration information; and measure the GNSS information using the measurement window.

At step 704, the terminal reports updated auxiliary information to the base station.

In embodiments of the disclosure, after the GNSS information is obtained by measurement using any of the screened measurement windows described above, new auxiliary information may be determined based on new GNSS information and reported to the base station, so that the base station determines measurement configuration information corresponding to the next GNSS information based on the new auxiliary information reported by the terminal, and indicates the terminal to measure the next GNSS information using the measurement configuration information.

In summary, according to the method for measuring the GNSS information provided in embodiments of the disclosure, the terminal may report the auxiliary information for determining the measurement configuration information to the base station before or after the GNSS information expires, the base station may update the measurement configuration information in time based on the received auxiliary information, and send the updated measurement configuration information to the terminal. Then, the terminal measures the GNSS information dynamically based on the measurement configuration information, which may avoid the situation where the terminal frequently performs GNSS measurements, and may reduce the power consumption of the terminal.

In the above examples of embodiments provided in the disclosure, the methods in the embodiments of the disclosure are described from the perspectives of the terminal and the base station, respectively. In order to realize each of the functions in the methods provided in the above embodiments of the disclosure, the terminal and the base station may include a hardware structure, a software module, so that each of the above functions is implemented in the form of a hardware structure, a software module, or a hardware structure plus a software module. A certain function in the above functions may be performed in the form of the hardware structure, the software module, or the hardware structure plus the software module.

Corresponding to the method for measuring GNSS information provided in the above several embodiments, the disclosure also provides an apparatus for measuring GNSS information. Since the apparatus for measuring GNSS information provided in embodiments of the disclosure corresponds to the method for measuring GNSS information provided in the above several embodiments, the implementation of the method for measuring GNSS information is also applicable to the apparatus for measuring GNSS information provided in embodiments of the disclosure, and will not be further described in detail in the embodiments.

FIG. 11 is a block diagram illustrating an apparatus 800 for measuring GNSS information according to an embodiment of the disclosure. The apparatus 800 may be a terminal.

As shown in FIG. 11, the apparatus 800 may include a receiving module 810 and a processing module 820.

The receiving module 810 may be configured to receive measurement configuration information sent by a base station, in which the measurement configuration information includes information for determining a measurement window.

The processing module 820 may be configured to measure GNSS information based on the measurement configuration information.

In some embodiments of the disclosure, as shown in FIG. 11, the apparatus 800 further includes: a sending module 830.

The sending module 830 may be configured to report auxiliary information for determining the measurement configuration information, in which the auxiliary information includes at least one of: a required measurement time for the GNSS information, an available time for the current GNSS information, or a start position of the available time for the GNSS information.

In some embodiments of the disclosure, the sending module 830 may be configured to, when a reporting trigger command is received, report the auxiliary information for determining the measurement configuration information to the base station; when it is determined that a preset reporting trigger condition is satisfied, report the auxiliary information for determining the measurement configuration information to the base station; or determine, based on resource configuration information sent by the base station, an uplink resource for sending an uplink reference signal, and report the auxiliary information for determining the measurement configuration information to the base station periodically via an uplink channel indicated by the uplink resource.

In some embodiments of the disclosure, the receiving module 810 may also be configured to receive the reporting trigger command sent by the base station, in which the reporting trigger command indicates the reporting of the auxiliary information.

In some embodiments of the disclosure, the receiving module 810 may also be configured to receive the resource configuration information sent by the base station, in which the resource configuration information indicates the uplink resource for sending the uplink reference signal.

In some embodiments of the disclosure, the measurement configuration information is carried in a higher layer signaling or a physical layer signaling.

In some embodiments of the disclosure, the processing module 820 may be configured to determine the measurement window indicated by the measurement configuration information; and measure the GNSS information using the measurement window.

In some embodiments of the disclosure, the processing module 820 may be configured to, when a measurement trigger command is received, determine a measurement window indicated by the measurement trigger command based on the measurement configuration information; and measure the GNSS information using the measurement window indicated.

In some embodiments of the disclosure, the receiving module 810 may also be configured to receive the measurement trigger command sent by the base station, in which the measurement trigger command indicates a measurement start time point for measuring the GNSS information and a number of measurement windows.

In some embodiments of the disclosure, the processing module 820 may be configured to, when a current GNSS information is expired, determine a measurement window based on the measurement configuration information, in which the measurement window is a measurement window after an expiration time point of the current GNSS information; and measure the GNSS information using the measurement window.

In some embodiments of the disclosure, the sending module 830 may be configured to report updated auxiliary information to the base station.

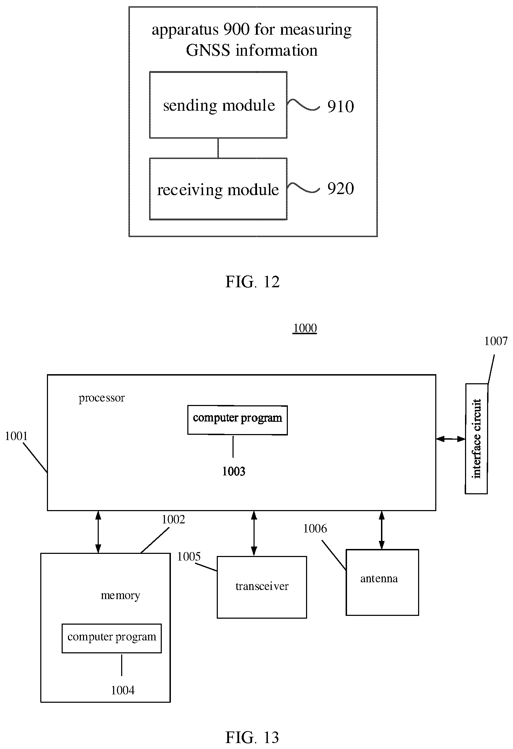

FIG. 12 is a block diagram illustrating an apparatus 900 for measuring GNSS information according to an embodiment of the disclosure. The apparatus 900 may be a base station.

As shown in FIG. 12, the apparatus 900 may include a sending module 910.

The sending module 910 may be configured to send measurement configuration information to a terminal, in which the measurement configuration information includes information for determining a measurement window.

In some embodiments of the disclosure, as shown in FIG. 12, the apparatus 900 further includes: a receiving module 920.

The receiving module 920 may be configured to receive auxiliary information for determining the measurement configuration information reported by the terminal, in which the auxiliary information includes at least one of: a required measurement time for the GNSS information, an available time for the current GNSS information, or a start position of the available time for the GNSS information.

In some embodiments of the disclosure, the sending module 910 may also be configured to send a reporting trigger command to the terminal, in which the reporting trigger command indicates the reporting of the auxiliary information.

In some embodiments of the disclosure, the sending module 910 may also be configured to send the resource configuration information to the terminal, in which the resource configuration information indicates an uplink resource for sending an uplink reference signal.

In some embodiments of the disclosure, the sending module 910 may be configured to send the measurement configuration information carried via a higher layer signaling or a physical layer signaling.

In some embodiments of the disclosure, the sending module 910 may also be configured to send a measurement trigger command to the terminal, in which the measurement trigger command indicates a measurement start time point for measuring the GNSS information and a number of measurement windows.

In some embodiments of the disclosure, the receiving module 920 may also be configured to receive updated auxiliary information reported by the terminal, in which the updated auxiliary information is sent by the terminal after measuring the GNSS information based on the measurement configuration information.

Referring to FIG. 13, FIG. 13 is a structural block diagram illustrating a communication device 1000 according to an embodiment of the disclosure. The communication device 1000 may be a network side device, a user equipment (UE), a chip, a system on chip or a processor that supports the network side device to implement the method, or a chip, a system on chip or a processor that supports the UE to implement the method. The device 1000 may be configured to implement the method described in the method embodiments, and may refer to descriptions in the method embodiments.

The communication device 1000 may include one or more processors 1001. The processor 1001 may include a general purpose processor or a dedicated processor. For example, the processor 1001 may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Alternately, the communication device 1000 may further include one or more memories 1002 with a computer program 1004 stored thereon. The computer program 1004 is executed by the processor 1001, so that the communication device 1000 performs the method as described in the above method embodiments. Alternately, the memory 1002 may further store data. The communication device 1000 and the memory 1002 may be independently configured or integrated together.

Alternately, the communication device 1000 may further include a transceiver 1005 and an antenna 1006. The transceiver 1005 may be referred to as a transceiving unit, a transceiver or a transceiving circuit, which may be configured to achieve a transceiving function. The transceiver 1005 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Alternately, the communication device 1000 may further include one or more interface circuits 1007. The interface circuit 1007 is configured to receive code instructions and transmit the code instructions to the processor 1001. The code instructions are executed by the processor 1001, so that the communication device 1000 performs the method according to the above method embodiment.

In an implementation, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1001 may be stored with a computer program 1003. The computer program 1003 is executed by the processor 1001, so that the communication device 1000 performs the method as described in the above method embodiments. The computer program 1003 may be solidified in the processor 1001, in which case the processor 1001 may be implemented in hardware.

In an implementation, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a UE, but the scope of the communication device described in the disclosure is not limited thereto, and a structure of the communication device may not be subject to FIG. 13. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

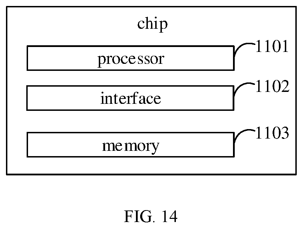

In the case that the communication device may be a chip or a system on chip, please refer to a diagram of a structure of a chip as illustrated in FIG. 14. The chip illustrated in FIG. 14 includes a processor 1101 and an interface 1102, in which the number of processors 1101 may be one or more and the number of interfaces 1103 may be more than one.

Alternately, the chip 1100 further includes a memory 1103, configured to save necessary computer program and data.

Those skilled in the related art may understand that various illustrative logical blocks and steps listed in embodiments of the disclosure may be implemented by electronic hardware, computer software or a combination of electronic hardware and computer software. Whether the function is implemented in hardware or software depends on specific applications and design requirements for an overall system. Those skilled in the art may implement the functions by using various methods for each specific application, but such an implementation should not be understood as beyond the protection scope of the embodiments of the disclosure.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of the embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, the terms "machine-readable medium" and "computer-readable medium" refer to any computer program product, device, and/or apparatus (e.g., disk, optical disk, memory, programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to a programmable processor.

The system and technology described herein may be implemented in a computing system that includes backend components (e.g., as a data server), or in a computing system that includes middleware components (e.g., an application server), or in a computing system that includes frontend components (e.g., a user computer with a graphical user interface or web browser, through which a user can interact with the system and technology described herein), or in any combination of backend components, middleware components, or frontend components. The components of the system can be interconnected via any form or medium of digital data communication (e.g., communication networks). Examples of communication networks include local area networks (LAN), wide area networks (WAN), and the internet.

A computer system may include both clients and servers. The client and server are typically located remotely from each other and usually interact through a communication network. The client-server relationship is established by running computer programs on respective computers that have a client-server relationship with each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

In addition, it should be understood that various embodiments of the disclosure may be implemented individually or in combination with other embodiments as the program permits.

Those skilled in the related art may realize that, in combination with units and algorithm steps of the examples described in the embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

## Claims

1. A method for measuring global navigation satellite system (GNSS) information, performed by a terminal, comprising:
receiving measurement configuration information sent by a base station, wherein the measurement configuration information comprises information for determining a measurement window; and
measuring GNSS information based on the measurement configuration information.

2. The method according to claim 1, further comprising:
reporting auxiliary information for determining the measurement configuration information, wherein the auxiliary information comprises at least one of: a required measurement time for the GNSS information, an available time for the current GNSS information, or a start position of the available time for the GNSS information.

3. The method according to claim 2, wherein reporting the auxiliary information for determining the measurement configuration information comprises:
when a reporting trigger command is received, reporting the auxiliary information for determining the measurement configuration information to the base station;
when it is determined that a preset reporting trigger condition is satisfied, reporting the auxiliary information for determining the measurement configuration information to the base station; or
determining, based on resource configuration information sent by the base station, an uplink resource for sending an uplink reference signal, and reporting the auxiliary information for determining the measurement configuration information to the base station periodically via an uplink channel indicated by the uplink resource.

4. The method according to claim 3, further comprising:
receiving the reporting trigger command sent by the base station, wherein the reporting trigger command indicates the reporting of the auxiliary information.

5. The method according to claim 3, further comprising:
receiving the resource configuration information sent by the base station, wherein the resource configuration information indicates the uplink resource for sending the uplink reference signal.

6. The method according to claim 1, wherein the measurement configuration information is carried in a higher layer signaling or a physical layer signaling.

7. The method according to claim 1, wherein measuring the GNSS information based on the measurement configuration information comprises:
determining the measurement window indicated by the measurement configuration information; and
measuring the GNSS information using the measurement window.

8. The method according to claim 1, wherein measuring the GNSS information based on the measurement configuration information comprises:
when a measurement trigger command is received, determining a measurement window indicated by the measurement trigger command based on the measurement configuration information; and
measuring the GNSS information using the measurement window indicated.

9. The method according to 8, further comprising:
receiving the measurement trigger command sent by the base station, wherein the measurement trigger command indicates a measurement start time point for measuring the GNSS information and a number of measurement windows.

10. The method according to claim 1, wherein measuring the GNSS information based on the measurement configuration information comprises:
when a current GNSS information is expired, determining a measurement window based on the measurement configuration information, wherein the measurement window is a measurement window after an expiration time point of the current GNSS information; and
measuring the GNSS information using the measurement window.

11. The method according to any one of claims 7, 8 and 10, wherein after measuring the GNSS information based on the measurement configuration information, the method further comprises:
reporting updated auxiliary information to the base station.

12. A method for measuring global navigation satellite system (GNSS) information, performed by a base station, comprising:
sending measurement configuration information to a terminal, wherein the measurement configuration information comprises information for determining a measurement window.

13. The method according to claim 12, further comprising:
receiving auxiliary information for determining the measurement configuration information reported by the terminal, wherein the auxiliary information comprises at least one of: a required measurement time for the GNSS information, an available time for the current GNSS information, or a start position of the available time for the GNSS information.

14. The method according to claim 13, further comprising:
sending a reporting trigger command to the terminal, wherein the reporting trigger command indicates the reporting of the auxiliary information.

15. The method according to claim 13, further comprising:
sending the resource configuration information to the terminal, wherein the resource configuration information indicates an uplink resource for sending an uplink reference signal.

16. The method according to claim 12, wherein the measurement configuration information is carried in a higher layer signaling or a physical layer signaling.

17. The method according to claim 12, further comprising:
sending a measurement trigger command to the terminal, wherein the measurement trigger command indicates a measurement start time point for measuring the GNSS information and a number of measurement windows.

18. The method according to claim 12, further comprising:
receiving updated auxiliary information reported by the terminal, wherein the updated auxiliary information is sent by the terminal after measuring the GNSS information based on the measurement configuration information.

19. A terminal, comprising:
a receiving module, configured to receive measurement configuration information sent by a base station, wherein the measurement configuration information comprises information for determining a measurement window; and
a processing module, configured to measure GNSS information based on the measurement configuration information.

20. A base station, comprising:
a sending module, configured to send measurement configuration information to a terminal, wherein the measurement configuration information comprises information for determining a measurement window.

21. A communication device comprising: a transceiver; a memory; and a processor connected to the transceiver and the memory respectively,
wherein the processor is configured to: control the transceiver to send and receive wireless signals and implement the method according to any one of claims 1 to 18, by executing computer-executable instructions on the memory.

22. A computer storage medium, storing computer-executable instructions which, when executed by a processor, enable the method according to any one of claims 1 to 18 to be implemented.

23. A communication system, comprising a terminal and a base station, wherein the terminal is configured to perform the method according to any one of claims 1 to 11, and
the base station is configured to perform the method according to any one of claims 12 to 18.
